# EUROPEAN PATENT SPECIFICATION

(11) **EP 4 400 873 B1**
(45) Date of publication and mention of the grant of the patent: **26.08.2026**
(21) Application number: 22866262.3
(22) Date of filing: 22.07.2022
(51) Int. Cl.: G01V 5/00, G21F 3/00, G01V 5/22, G21F 7/005

(54) **RADIATION PROTECTION ARRANGEMENT AND SECURITY INSPECTION DEVICE**
STRAHLUNGSSCHUTZANORDNUNG UND SICHERHEITSINSPEKTIONSVORRICHTUNG
DISPOSITIF DE PROTECTION CONTRE LE RAYONNEMENT ET DISPOSITIF D'INSPECTION DE SÉCURITÉ

(30) Priority: 09.09.2021 CN 202111053839
(43) Date of publication of application: 17.07.2024
(73) Proprietor: Nuctech Company Limited, TongFang Building Shuangqinglu Haidian District Beijing 100084 (CN); Tsinghua University, Haidian District, Beijing 100084 (CN)
(72) Inventor: ZHANG, Li, Beijing 100084 (CN); SUN, Yunda, Beijing 100084 (CN); JIN, Xin, Beijing 100084 (CN); LIANG, Wuyang, Beijing 100084 (CN); CHANG, Ming, Beijing 100084 (CN); SHEN, Le, Beijing 100084 (CN)
(74) Representative: Cabinet Beau de Loménie
(86) International application number: PCT/CN2022/107386
(87) International publication number: WO 2023/035788

(56) References cited:
- CN-A- 101 382 506
- CN-A- 105 954 807
- CN-A- 110 376 656
- CN-A- 111 066 093
- CN-U- 208 384 139
- CN-U- 211 180 247
- US-A1- 2005 185 757
- US-A1- 2007 003 009
- US-A1- 2008 310 586
- US-A1- 2019 129 059
- US-A1- 2020 324 005
- US-B2- 7 415 094

## Description

### TECHNICAL FIELD

The present disclosure relates to the field of security inspection. In particular, the present disclosure relates to a radiation protection arrangement and a security inspection device.

### BACKGROUND

Generally, industrial X-ray imaging refers to a nuclear imaging technology applied in industry, commonly including two-dimensional digital radiography (DR) and three-dimensional computed tomography (CT). A principle of a DR imaging system lies in that after X-rays interact with objects, different objects transmit different doses of X-rays, and a DR image may be obtained according to the remaining X-rays detected. The CT is to scan different sections to obtain X-ray images of these sections, then calculate a linear attenuation coefficient of the object, and obtain a three-dimensional voxel data image after particular technical processing.

According to the principle of X-ray imaging, in order to obtain information of the entire object, X-ray energy needs to be high enough to penetrate the scanned object. The interaction between X-rays and objects is mainly ionizing radiation, which may cause a radiation damage to a surrounding human body. Scattering may occur during the interaction between X-rays and objects. The energy of the scattered rays is not as high as the energy of the initial X-rays, but it may still cause damage to the surrounding human body. Therefore, when designing an X-ray imaging system, it is necessary to consider an X-ray protection design.

For a normal security inspection device, shielding curtains may be suspended at an entrance and an exit to prevent a radiation from leaking from the security inspection device. However, when an inspected object leaves the security inspection device, the shielding curtain may be stretched apart, the radiation may leak at this time, causing a consequence of personnel being exposed to the radiation. Following are prior-art of the present disclosure:
US Patent Application Publication No. US2007003009A1 discloses apparatuses and methods for securing a location. Particularly, US2007003009A1 is directed towards methods, apparatuses, and integrated systems for the screening of individual passengers and their corresponding carry-on baggage carts with improved throughput, efficiency, and quality. In addition, US2007003009A1 is directed towards a carry-on baggage cart specifically designed for the disclosed integrated carry-on baggage cart and passenger screening system.
US Patent Application Publication No. US2008310586A1 discloses an apparatus and method for providing an x-ray shield means in an x-ray detection system. An x-ray inhibiting container for use in a computed tomography system is provided, the container includes: a peripheral wall; and a bottom, the peripheral wall and bottom define a receiving area, and a forward portion and a rearward portion of the peripheral wall comprise an x-ray inhibiting material. The system includes: a computed tomography scanner, configured to produce x-ray projection data as an object is passed through the computed tomography scanner, the computed tomography scanner includes: a gantry having an opening; and an x-ray source configured to project a fan beam of x-rays towards a detector array disposed on an opposite side of the gantry opening, the x-ray source and detector array being mounted to the gantry about the opening; a structure defining an internal volume being configured to receive at least the gantry of the computed tomography scanner therein, the structure having an input opening and an outlet opening, the structure includes an x-ray shielding material; and a motorized conveyor for passing a plurality of tubs through the input opening to the outlet opening, each of the tubs includes a peripheral wall and a bottom to define a tub volume and a forward portion and a rearward portion of the peripheral wall is configured to substantially cover the input opening or the outlet opening as the plurality of tubs are passed through the structure, the forward portion and the rearward portion each includes an x-ray shielding material.
US Patent No. US7415094B2 discloses a security screening system for scanning items, the system includes: a scanner, configured to produce x-ray projection data as an object is passed through the scanner, at least a portion of the scanner being received within a structure, the structure having an input opening and an outlet opening, the input opening being configured to receive objects to be scanned and the output opening being configured to receive objects scanned by the scanner; an input conveyor for passing a plurality of bins through the input opening to the outlet opening, the input conveyor having an input end for receiving the plurality of bins to pass the plurality of bins into the input opening and an output end for delivering the plurality of bins from the outlet opening; and a return conveyor positioned to return the plurality of bins to an area proximate to the input end of the input conveyor, the return conveyor being positioned below the input conveyor, the return conveyor does not pass through the scanner.

### SUMMARY

The present disclosure is defined by the appended claims. According to an aspect of the present disclosure, a radiation protection arrangement is provided, including: a housing including a first port and a second port, and a tray having an accommodation space. A channel is defined between the first port and the second port. The tray is allowed to pass through the channel via the first port and the second port; and the tray has a first end wall, a second end wall, and a bottom portion connected between the first end wall and the second end wall, and a shape of the first end wall and/or a shape of the second end wall are/is configured to fit with an inner wall of the housing so as to block radiation from leaving the channel from the accommodation space through the second port or the first port.

Moreover, the radiation protection arrangement further includes at least one shielding curtain, the at least one shielding curtain has one end connected to the inner wall of the housing and extending transversely for a length in an extension direction of the channel, so that the at least one shielding curtain spatially overlaps the first end wall and the second end wall.

In addition, a top portion and/or a side portion of the first end wall and/or the second end wall of the tray include/includes an elastic deformable portion partially overlapping the at least one shielding curtain in space, and the elastic deformable portion is elastically deformable when in contact with each of the at least one shielding curtain during a process of the tray passing through the channel, so that the elastic deformable portion of the first end wall and/or the second end wall moves from one side to the other side of each of the at least one shielding curtain when in contact with the shielding curtain.

In an embodiment, the radiation protection arrangement further includes at least one shielding curtain arranged on a partial or entire circumference of the inner wall of the housing, so that the at least one shielding curtain spatially overlaps the first end wall and the second end wall.

In an embodiment, the at least one shielding curtain includes a plurality of shielding curtains spaced apart from each other on the inner wall of the housing at a plurality of different positions of the channel in the extension direction of the channel.

In an embodiment, the at least one shielding curtain is configured to block the radiation from penetrating and is deformable to conform to a movement of the tray when the tray moves to pass through the channel and the first end wall or the second end wall comes into contact with each of the at least one shielding curtain, so as to allow the first end wall or the second end wall to move from one side to the other side of each shielding curtain.

In an embodiment, the at least one shielding curtain spatially and partially overlaps the first end wall and/or the second end wall in the extension direction of the channel, so that the radiation is blocked by an overlapping portion of the at least one shielding curtain with the first end wall and/or the second end wall when escaping from the channel via the first port or the second port.

In an embodiment, the tray includes a side wall connected to the bottom portion, and the side wall is connected between the first end wall and the second end wall.

In an embodiment, the housing is further configured to define a radiation source cavity for accommodating a radiation source, and the housing is further configured to define a detection device cavity for accommodating a detection device; and the radiation source cavity and the detection device cavity are configured to allow radiation emitted by the radiation source to be incident to the channel and ultimately enter the detection device cavity.

In an embodiment, an outer surface and/or an inner surface of the housing are/is covered with a radiation shielding layer to prevent the radiation from penetrating; and/or an outer surface and/or an inner surface of the first end wall and the second end wall of the tray are covered with a radiation shielding layer to prevent the radiation from penetrating.

In an embodiment, the first end wall and/or the second end wall have/has a corresponding rectangular contour, circular contour, elliptical contour, or other polygonal contours to the first port and/or the second port.

In an embodiment, the tray includes a moving apparatus provided at the bottom portion so that the tray is movable within the channel.

In an embodiment, the radiation protection arrangement further includes a conveying apparatus provided within the channel and configured to transport the tray from one of the first port and the second port to the other.

According to another aspect of the present disclosure, a security inspection device is provided, including the radiation protection arrangement described above.

### BRIEF DESCRIPTION OF THE DRAWINGS

One or more embodiments of the present disclosure will now be described, by way of example only, with reference to the accompanying drawings, in which:
FIG. 1 shows a cross-sectional view of a radiation protection arrangement according to an embodiment of the present disclosure;
FIG. 2 shows a cross-sectional view of a radiation protection arrangement according to another embodiment of the present disclosure;
FIG. 3 shows a cross-sectional view of a radiation protection arrangement according to an embodiment of the present disclosure; and
FIG. 4 shows a schematic diagram of a tray of a radiation protection arrangement according to an embodiment of the present disclosure.

### DETAILED DESCRIPTION OF EMBODIMENTS

In the following embodiments, the terms "first", "second", "third", etc. are used to distinguish different components, rather than sorting or indicating priority. The terms indicating orientations such as "upper", "lower", etc. in the description do not mean absolute orientations, but rather indicate relative positions between components.

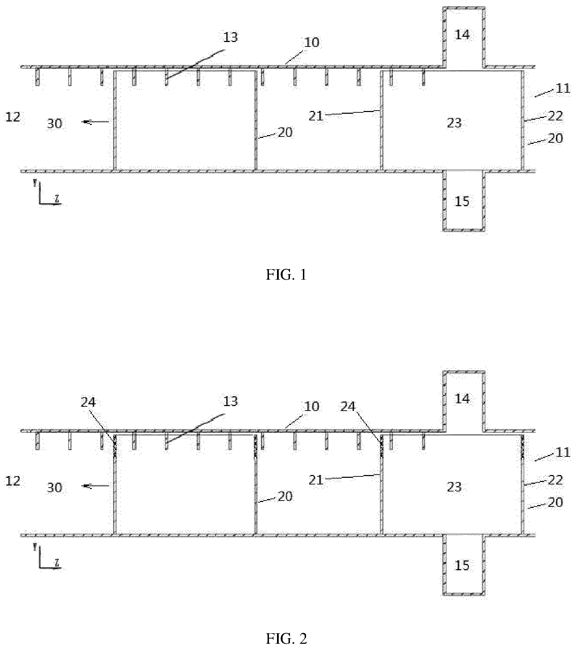

As shown in FIG. 1, the embodiments of the present disclosure provide a radiation protection arrangement, including a housing 10 and a tray 20. The housing 10 includes a first port 11 and a second port 12, and a channel 30 is defined between the first port 11 and the second port 12. The tray 20 has an accommodation space 23. The tray 20 is allowed to pass through the channel 30. The tray 20 is used to accommodate an object to be inspected, such as packages, articles, boxes, food, etc., and the object to be inspected may be accommodated in the accommodation space 23. In an embodiment, the tray 20 may enter the housing 10 via the first port 11 and then exit the housing 10 via the second port 12. In other words, the tray 20 may enter the channel 30 via the first port 11, and leave the channel 30 from the second port 12 after passing through the channel 30 so as to complete an inspection. In another embodiment, the tray 20 may enter the housing 10 or the channel 30 via the second port 12, and leave the channel 30 or the housing 10 via the first port 11 after passing through the channel 30.

The tray 20 has a first end wall 21, a second end wall 22, and a bottom portion connected between the first end wall 21 and the second end wall 22. A shape of the first end wall 21 and/or a shape of the second end wall 22 are/is configured to fit with the channel 30 so as to block radiation from leaving the channel 30 from the accommodation space 23 through the second port 12 or the first port 11. In this embodiment, the shape of the first end wall 21 and/or the shape of the second end wall 22 fitting with the channel 30 means that the shape of one or both of the first end wall 21 and the second end wall 22 is close to a shape defined by an inner wall of the channel 30, so that edges of the first end wall 21 and the second end wall 22 are close to the inner wall of the housing 10. As the ends of the first end wall 21 and the second end wall 22 are close to the inner wall of the channel 30, most of the radiation from a radiation source in the channel 30 may be blocked by the first end wall 21 and the second end wall 22 during a process of being transmitted to the first port 11 or the second port 12, so that the radiation protection arrangement may shield the escaping radiation.

In the radiation protection arrangement of FIG. 1, two trays 20 are shown, which travel from the first port 11 on the right side toward the second port 12. However, in an embodiment, the radiation protection arrangement may include only one tray. In an embodiment, the radiation protection arrangement may include three or more trays, thereby allowing more articles to be inspected to enter the radiation protection arrangement.

The first end wall 21 and/or the second end wall 22 have a corresponding rectangular contour, circular contour, elliptical contour, or other polygonal contour, such as pentagon, hexagon, or special shape to the first port 11 and/or the second port 12. The shape of the first end wall 21 and/or the second end wall 22 and the shape of the first port 11 and/or the second port 12 may be determined as needed. The shape of the first end wall 21 and/or the second end wall 22 corresponding to the shape of the first port 11 and/or the second port 12 is advantageous in that a gap between the first end wall 21 and the channel 30 and/or a gap between the second end wall 22 and the channel 30 may be reduced.

The first end wall 21, the second end wall 22, and the inner wall of the housing 10 may block the radiation from the channel 30, or may have a function of shielding radiation. The first end wall 21, the second end wall 22, and the inner wall of the housing 10 are made of a radiation shielding material, such as lead. In an embodiment, in order to reduce weight and cost, the first end wall 21, the second end wall 22, and the inner wall of the housing 10 are made of other materials, and only their surfaces are covered with radiation shielding materials, such as lead skins. etc., thereby having the function of blocking radiation. For example, an outer surface and/or an inner surface of the housing 10 are/is covered with a radiation shielding layer to prevent radiation from penetrating; an outer surface and/or an inner surface of the first end wall 21 and the second end wall 22 of the tray 20 are covered with a radiation shielding layer to prevent radiation from penetrating.

The tray 20 includes a side wall connected to the bottom portion, and the side wall is connected between the first end wall 21 and the second end wall 22. However, for example, the side wall may be optional. In other words, in the aforementioned embodiments, the tray 20 may include the first end wall 21, the second end wall 22, the bottom portion, and the side wall; or may only include the first end wall 21, the second end wall 22, and the bottom portion, which may be determined as needed and does not affect the purpose of radiation protection of the radiation protection arrangement of the present disclosure to achieve.

The radiation protection arrangement further includes a shielding curtain 13. One or more shielding curtains 13 may be provided and arranged in the channel 30. Specifically, one end of the shielding curtain 13 is connected to the inner wall of the housing 10 and extends transversely for a length in an extension direction of the channel 30. For example, in the channel 30 within the housing 10, one end of the shielding curtain 13 at an upper portion of the channel 30 is connected to the upper portion of the channel 30 and suspended in the channel 30. In an example, one end of the shielding curtain 13 at other portions of the channel 30 is connected to the inner wall of the channel 30, and the shielding curtain 13 extends inward and transversely from the inner wall of the housing 10 or the channel 30. A length of the shielding curtain 13 may be selected as needed.

The shielding curtain 13 spatially overlaps the first end wall 21 and the second end wall 22, which means that, in the extension direction of the channel 30, the shielding curtain 13 partially overlaps the first end wall 21 and/or the second end wall 22 in space, so that the radiation is blocked by an overlapping portion of the at least one shielding curtain 13 with the first end wall 21 and/or an overlapping portion of the at least one shielding curtain 13 with the second end wall 22 when escaping out of the channel 30 via the first port 11 or the second port 12.

In the present disclosure, a length of the shielding curtain 13 may be set as needed. For example, the length of the shielding curtain 13 is less than half an amplitude (length or width) or diameter of a cross-section of the channel 30, or even smaller. For example, the length of the shielding curtain 13 may be one-fourth, one-fifth, one-sixth the amplitude (length or width) or diameter of the cross-section of the channel 30. For example, specifically, the length may be 1 meter, 0.5 meters, 0.4 meters, 0.3 meters, etc.

In an embodiment, the shielding curtain 13 may be arranged on a partial or entire circumference of the inner wall of the housing 10. For example, at a position of the channel 30, the shielding curtain 13 is arranged along the entire circumference of the inner wall of the housing 10. The shielding curtain 13 may also be arranged along a partial circumference of the inner wall of the housing 10.

In an example, the radiation protection arrangement includes a plurality of shielding curtains 13 spaced apart from each other on the inner wall of the housing 10 at a plurality of different positions of the channel 30 in the extension direction of the channel 30. In other words, the shielding curtains 13 are arranged along a partial or entire circumference of the inner wall of the housing 10 at each of the plurality of positions of the channel 30. In an example, one or more circles of shielding curtains 13 are arranged on the inner wall of the housing 10 in the extension direction of the channel 30. In this embodiment, the one or more circles of shielding curtains 13 on the inner wall of the housing 10 and the first end wall 21 and/or the second end wall 22 form a labyrinth in space. When traveling from one side of the first end wall 21 to outside the channel, it is required to pass through a meandering path defined by the shielding curtains 13 and the first end wall 21, so that a propagation of the radiation may be blocked.

In an example, the shielding curtain 13 is configured to block the radiation from penetrating, and is deformable so that the first end wall 21 may push the shielding curtain 13 when in contact with the shielding curtain 13 and the shielding curtain 13 may deform as the first end wall 21 moves when the tray 20 passes through the channel 30 (for example, when the first end wall 21 moves from a side of the first port 11 toward a side of second port 12). In this case, one end of the shielding curtain 13 is fixed to the inner wall of the housing 10, and a second end of the shielding curtain 13 may be biased toward the second port 12, thereby allowing the first end wall 21 to move from one side of the shielding curtain 13 to the other side when the first end wall 21 is in contact with the shielding curtain 13. As the first end wall 21 remains in contact with the shielding curtain 13 during the movement of the first end wall 21, the radiation may fail to pass between the two and escape to the second port 12 or the first port 11, so that a good shielding function may be obtained.

The shielding curtain 13 may include a substrate made of a fabric, and a skin made of a shielding material such as lead that covers a surface of the substrate. In an example, the shielding curtain 13 may be connected to the inner wall of the top portion of the housing 10 in a suspended manner.

The shielding curtain 13 may include: a substrate made of an elastic material, such as a frame made of an elastic material; and a skin made of a shielding material such as lead that covers the substrate. In an example, the shielding curtain 13 may be connected to the inner wall of the side portion or top portion of the housing 10 through the substrate, and the substrate supports the shielding curtain 13 to extend transversely along the channel 30. The elastic material here may be a spring or other elastic materials that may be used, such as plastic (not shown).

The tray 20 is movable from the second port 12 toward the first port 11 in order to pass through the channel 30. The shielding curtain 13 may allow, for example, the second end wall 22 to move from one side of the shielding curtain 13 to the other side when the second end wall 22 is in contact with the shielding curtain 13. In this case, the shielding curtain 13 may be deformed and biased, and a direction of deformation and bias of the shielding curtain 13 is opposite to the direction of deformation and bias in the aforementioned embodiments.

A plurality of circles of shielding curtains 13 are provided on the inner wall of the housing 10, that is, when moving in the extension direction of the channel 30, the first end wall 21 or the second end wall 22 may come into contact with the plurality of shielding curtains 13 and push each shielding curtain 13 to deform and bias.

According to the invention, the top portion and/or side portion of the first end wall 21 and/or the second end wall 22 of the tray 20 include/includes an elastic deformable portion 24. The elastic deformable portion partially overlaps the at least one shielding curtain 13 in space. During a process of the tray 20 passing through the channel 30, the elastic deformable portion may elastically deform when coming into contact with each of the at least one shielding curtain 13 so that the elastic deformable portion of the first end wall 21 and/or the second end wall 22 moves from one side of each of the plurality of shielding curtains 13 to the other side when in contact with the shielding curtain 13.

In an embodiment, the tray 20 includes the first end wall 21, the second end wall 22, and the bottom portion. The first end wall 21 and the second end wall 22 include the elastic deformable portions 24. For example, outer peripheral portions of the first end wall 21 and the second end wall 22 may be the elastic deformable portions 24. In other words, the first end wall 21 and the second end wall 22 are integral with the elastic deformable portions 24.

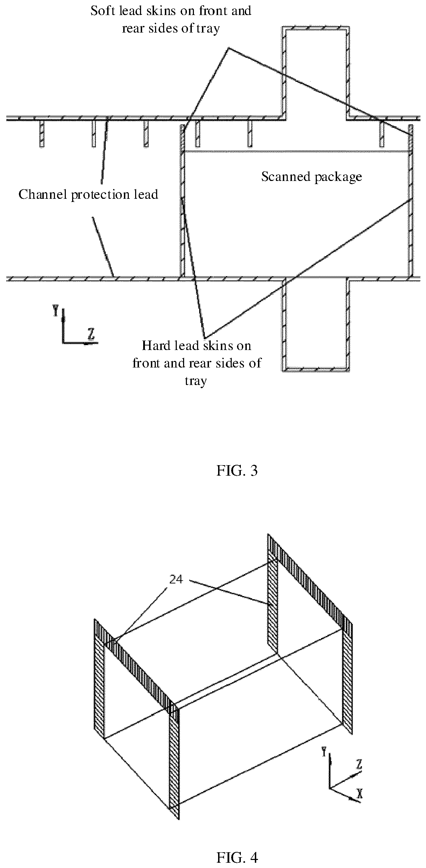

In another embodiment, as shown in FIG. 4, the tray 20 includes an elastic deformable portion 24, and the elastic deformable portion 24 is connected to the outer peripheral portion of the first end wall 21 and the outer peripheral portion of the second end wall 22. The elastic deformable portion 24 may be made of, for example, an elastic deformable material, and has a surface covered with a material that may shield radiation, such as lead. In the embodiment, the tray 20 may further include a side wall. However, the side wall is not necessary.

In an embodiment, as shown in FIG. 1 to FIG. 4, the housing 10 is further configured to define a radiation source cavity 14 for accommodating a radiation source, and is further configured to define a detection device cavity 15 for accommodating a detection device. In an embodiment, the radiation source cavity 14 and the detection device cavity 15 are configured to allow radiation emitted by the radiation source to be incident to the channel 30 and ultimately enter the detection device cavity 15. In an embodiment, the radiation source cavity 14 is disposed opposite to the detection device cavity 15, the radiation source cavity 14 accommodates the radiation source so that the radiation source does not protrude into the channel 30, and the detection device cavity 15 accommodates the detection device so that the detection device does not protrude into the channel 30. Shapes of the radiation source cavity 14 and the detection device cavity 15 are not specifically required, and may be flexibly determined according to specific shapes of the radiation source and the detection device.

The channel of the radiation protection arrangement shown in FIG. 1 and FIG. 2 is longer on a left side of the radiation source cavity 14. However, in other embodiments, the channel of the radiation protection arrangement may have the same length on the left side and a right side of the radiation source cavity 14.

In an embodiment, the tray 20 has a moving apparatus provided at the bottom portion so that the tray 20 is movable within the channel 30. For example, the bottom portion of the tray 20 may be provided with wheels, which are not shown in the accompanying drawings.

In an embodiment, the radiation protection arrangement may further include a conveying apparatus provided in the channel 30 and configured to transport the tray 20 from one of the first port 11 and the second port 12 to the other. In the embodiment, an upper conveying surface of the conveying apparatus may constitute a surface of the bottom portion of the channel 30.

According to another aspect of the present disclosure, a security inspection device is further provided, including the radiation protection arrangement in any of the aforementioned embodiments. The security inspection device may include, for example, a controller, which may control a beam emission time, a dose and other parameters of the radiation source. For example, in an embodiment, the controller may control the radiation source to emit a beam to perform inspection when the tray is located at a beam outlet of the radiation source, and shut down the radiation emission of the radiation source after the tray leaves the beam outlet of the radiation source.

In an example, the controller may further receive a measurement signal from the detection device and obtain information of the inspected object based on the measurement signal.

In an example, the controller may further include a display for presenting a detection result to a user.

The controller may further include an alarm for issuing a warning when a dangerous article is detected, so as to alert security personnel for further processing.

Those skilled in the art may conceive of other assemblies, radiation protection arrangements and features without departing from the scope of the appended claims. In particular, it should be noted that, as will be appreciated by those skilled in the art, one or more features included in one or more accompanying drawings may be integrated into the radiation protection arrangement as shown in other drawings. It should be understood that the detailed description and specific examples are given by way of illustration only, because through the description, various changes and modifications within the scope of the present disclosure may become apparent to those skilled in the art.

## Claims

1. A radiation protection arrangement, comprising:
a housing (10) comprising a first port (11) and a second port (12), wherein a channel (30) is defined between the first port (11) and the second port (12);
a tray (20) having an accommodation space (23); and
at least one shielding curtain (13),
wherein the tray (20) is allowed to pass through the channel (30) via the first port (11) and the second port (12), and the tray (20) has a first end wall (21), a second end wall (22), and a bottom portion connected between the first end wall (21) and the second end wall (22), and a shape of the first end wall (21) and/or a shape of the second end wall (22) are/is configured to fit with an inner wall of the housing (10) so as to block radiation from leaving the channel (30) from the accommodation space (23) through the second port (12) or the first port (11),
wherein the at least one shielding curtain (13) has one end connected to the inner wall of the housing (10) and extending transversely for a length in an extension direction of the channel (30), so that the at least one shielding curtain (13) spatially overlaps the first end wall (21) and the second end wall (22),
**characterized in that**,
a top portion and/or a side portion of the first end wall (21) and/or the second end wall (22) of the tray (20) comprise/comprises an elastic deformable portion (24) partially overlapping the at least one shielding curtain (13) in space, and the elastic deformable portion (24) is elastically deformable when in contact with each of the at least one shielding curtain (13) during a process of the tray (20) passing through the channel (30), so that the elastic deformable portion (24) of the first end wall (21) and/or the second end wall (22) moves from one side to the other side of each of the at least one shielding curtain (13) when in contact with the shielding curtain (13).

2. The radiation protection arrangement according to claim 1, wherein the at least one shielding curtain (13) is arranged on a partial or entire circumference of the inner wall of the housing (10), so that the at least one shielding curtain (13) spatially overlaps the first end wall (21) and the second end wall (22).

3. The radiation protection arrangement according to claim 1 or 2, wherein the at least one shielding curtain (13) comprises a plurality of shielding curtains (13) spaced apart from each other on the inner wall of the housing (10) at a plurality of different positions of the channel (30) in the extension direction of the channel (30).

4. The radiation protection arrangement according to claim 1 or 2, wherein the at least one shielding curtain (13) is configured to block the radiation from penetrating and is deformable to conform to a movement of the tray (20) when the tray (20) moves to pass through the channel (30) and the first end wall (21) or the second end wall (22) comes into contact with each of the at least one shielding curtain (13), so as to allow the first end wall (21) or the second end wall (22) to move from one side to the other side of each shielding curtain (13).

5. The radiation protection arrangement according to claim 1 or 2, wherein the at least one shielding curtain (13) spatially and partially overlaps the first end wall (21) and/or the second end wall (22) in the extension direction of the channel (30), so that the radiation is blocked by an overlapping portion of the at least one shielding curtain (13) with the first end wall (21) and/or the second end wall (22) when escaping from the channel (30) via the first port (11) or the second port (12).

6. The radiation protection arrangement according to claim 5, wherein the tray (20) comprises a side wall connected to the bottom portion, and the side wall is connected between the first end wall (21) and the second end wall (22).

7. The radiation protection arrangement according to claim 1, wherein the housing (10) is further configured to define a radiation source cavity (14) for accommodating a radiation source, and the housing (10) is further configured to define a detection device cavity (15) for accommodating a detection device; and
wherein the radiation source cavity (14) and the detection device cavity (15) are configured to allow radiation emitted by the radiation source to be incident to the channel (30) and ultimately enter the detection device cavity (15).

8. The radiation protection arrangement according to claim 1, wherein an outer surface and/or an inner surface of the housing (10) are/is covered with a radiation shielding layer to prevent the radiation from penetrating; and/or
wherein an outer surface and/or an inner surface of the first end wall (21) and the second end wall (22) of the tray (20) are covered with a radiation shielding layer to prevent the radiation from penetrating.

9. The radiation protection arrangement according to claim 1, wherein the first end wall (21) and/or the second end wall (22) have/has a corresponding rectangular contour, circular contour, elliptical contour, or other polygonal contours to the first port (11) and/or the second port (12).

10. The radiation protection arrangement according to claim 1, wherein the tray (20) comprises a moving apparatus provided at the bottom portion so that the tray (20) is movable within the channel (30).

11. The radiation protection arrangement according to claim 1, further comprising a conveying apparatus provided within the channel (30) and configured to transport the tray (20) from one of the first port (11) and the second port (12) to the other.

12. A security inspection device, comprising the radiation protection arrangement according to any one of claims 1 to 11.

## Patentansprüche

1. Strahlungsschutzanordnung, umfassend:
ein Gehäuse (10), umfassend einen ersten Anschluss (11) und einen zweiten Anschluss (12), wobei zwischen dem ersten Anschluss (11) und dem zweiten Anschluss (12) ein Kanal (30) definiert ist;
einen Kasten (20), der einen Aufnahmeraum (23) aufweist; und
mindestens einen Abschirmvorhang (13),
wobei dem Kasten (20) ermöglicht ist, über den ersten Anschluss (11) und den zweiten Anschluss (12) durch den Kanal (30) zu verlaufen, und der Kasten (20) eine erste Stirnwand (21), eine zweite Stirnwand (22) und einen zwischen der ersten Stirnwand (21) und der zweiten Stirnwand (22) verbundenen Bodenabschnitt aufweist, und eine Form der ersten Stirnwand (21) und/oder eine Form der zweiten Stirnwand (22) konfiguriert ist/sind, um mit einer Innenwand des Gehäuses (10) zusammenzupassen, um zu verhindern, dass Strahlung aus dem Kanal (30) aus dem Aufnahmeraum (23) durch den zweiten Anschluss (12) oder den ersten Anschluss (11) austritt,
wobei der mindestens eine Abschirmvorhang (13) ein Ende aufweist, das mit der Innenwand des Gehäuses (10) verbunden ist, und sich quer über eine Länge in einer Erstreckungsrichtung des Kanals (30) erstreckt, sodass der mindestens eine Abschirmvorhang (13) die erste Stirnwand (21) und die zweite Stirnwand (22) räumlich überlappt,
**dadurch gekennzeichnet, dass**
ein oberer Abschnitt und/oder ein Seitenabschnitt der ersten Stirnwand (21) und/oder der zweiten Stirnwand (22) des Kastens (20) einen elastisch verformbaren Abschnitt (24) umfasst/umfassen, der den mindestens einen Abschirmvorhang (13) im Raum teilweise überlappt, und der elastisch verformbare Abschnitt (24) bei Kontakt mit jedem des mindestens einen Abschirmvorhangs (13) während eines Vorgangs eines Verlaufs des Kastens (20) durch den Kanal (30) elastisch verformbar ist, sodass sich der elastisch verformbare Abschnitt (24) der ersten Stirnwand (21) und/oder der zweiten Stirnwand (22) bei Kontakt mit dem Abschirmvorhang (13) von einer Seite auf die andere Seite von jedem von dem mindestens einen Abschirmvorhang (13) bewegt.

2. Strahlungsschutzanordnung nach Anspruch 1, wobei der mindestens eine Abschirmvorhang (13) an einem Teilumfang oder an dem gesamten Umfang der Innenwand des Gehäuses (10) angeordnet ist, sodass der mindestens eine Abschirmvorhang (13) die erste Stirnwand (21) und die zweite Stirnwand (22) räumlich überlappt.

3. Strahlungsschutzanordnung nach Anspruch 1 oder 2, wobei der mindestens eine Abschirmvorhang (13) eine Vielzahl von Abschirmvorhängen (13) umfasst, die an der Innenwand des Gehäuses (10) an einer Vielzahl verschiedener Positionen des Kanals (30) in der Erstreckungsrichtung des Kanals (30) voneinander beabstandet sind.

4. Strahlungsschutzanordnung nach Anspruch 1 oder 2, wobei der mindestens eine Abschirmvorhang (13) konfiguriert ist, um ein Durchdringen der Strahlung zu blockieren, und verformbar ist, um sich einer Bewegung des Kastens (20) anzupassen, wenn sich der Kasten (20) bewegt, um durch den Kanal (30) zu verlaufen, und die erste Stirnwand (21) oder die zweite Stirnwand (22) mit jedem von dem mindestens einen Abschirmvorhang (13) in Kontakt kommt, sodass es der ersten Stirnwand (21) oder der zweiten Stirnwand (22) ermöglicht wird, sich von einer Seite auf die andere Seite von jedem Abschirmvorhang (13) zu bewegen.

5. Strahlungsschutzanordnung nach Anspruch 1 oder 2, wobei der mindestens eine Abschirmvorhang (13) die erste Stirnwand (21) und/oder die zweite Stirnwand (22) in der Erstreckungsrichtung des Kanals (30) räumlich und teilweise überlappt, sodass die Strahlung durch einen Überlappungsabschnitt des mindestens einen Abschirmvorhangs (13) mit der ersten Stirnwand (21) und/oder der zweiten Stirnwand (22) blockiert wird, wenn sie über den ersten Anschluss (11) oder den zweiten Anschluss (12) aus dem Kanal (30) austritt.

6. Strahlungsschutzanordnung nach Anspruch 5, wobei der Kasten (20) eine mit dem Bodenabschnitt verbundene Seitenwand umfasst, und die Seitenwand zwischen der ersten Stirnwand (21) und der zweiten Stirnwand (22) verbunden ist.

7. Strahlungsschutzanordnung nach Anspruch 1, wobei das Gehäuse (10) ferner konfiguriert ist, um einen Strahlungsquellenhohlraum (14) zum Aufnehmen einer Strahlungsquelle zu definieren, und das Gehäuse (10) ferner konfiguriert ist, um einen Detektionsvorrichtungshohlraum (15) zum Aufnehmen einer Detektionsvorrichtung zu definieren; und
wobei der Strahlungsquellenhohlraum (14) und der Detektionsvorrichtungshohlraum (15) konfiguriert sind, um zu ermöglichen, dass von der Strahlungsquelle emittierte Strahlung auf den Kanal (30) auftrifft und schließlich in den Detektionsvorrichtungshohlraum (15) eintritt.

8. Strahlungsschutzanordnung nach Anspruch 1, wobei eine Außenfläche und/oder eine Innenfläche des Gehäuses (10) mit einer Strahlungsabschirmschicht bedeckt ist/sind, um zu verhindern, dass die Strahlung hindurchdringt; und/oder
wobei eine Außenfläche und/oder eine Innenfläche der ersten Stirnwand (21) und der zweiten Stirnwand (22) des Kastens (20) mit einer Strahlungsabschirmschicht bedeckt ist/sind, um zu verhindern, dass die Strahlung hindurchdringt.

9. Strahlungsschutzanordnung nach Anspruch 1, wobei die erste Stirnwand (21) und/oder die zweite Stirnwand (22) eine dem ersten Anschluss (11) und/oder dem zweiten Anschluss (12) entsprechende rechteckige Kontur, kreisförmige Kontur, elliptische Kontur oder andere polygonale Konturen aufweist/aufweisen.

10. Strahlungsschutzanordnung nach Anspruch 1, wobei der Kasten (20) eine an dem Bodenabschnitt bereitgestellte Bewegungsvorrichtung umfasst, sodass der Kasten (20) innerhalb des Kanals (30) bewegbar ist.

11. Strahlungsschutzanordnung nach Anspruch 1, ferner umfassend eine innerhalb des Kanals (30) bereitgestellte Fördervorrichtung, die konfiguriert ist, um den Kasten (20) von einem von dem ersten Anschluss (11) und dem zweiten Anschluss (12) zu dem anderen zu transportieren.

12. Sicherheitsprüfungsvorrichtung, umfassend die Strahlungsschutzanordnung nach einem der Ansprüche 1 bis 11.

## Revendications

1. Dispositif de protection contre le rayonnement, comprenant :
une enceinte (10) comprenant une première ouverture (11) et une deuxième ouverture (12), dans lequel un canal (30) est défini entre la première ouverture (11) et la deuxième ouverture (12) ;
un plateau (20) ayant un espace de réception (23) ;
et au moins un écran de blindage (13),
dans lequel le plateau (20) peut passer par le canal (30) via la première ouverture (11) et la deuxième ouverture (12), et le plateau (20) possède une première paroi d'extrémité (21), une deuxième paroi d'extrémité (22), et une partie de fond reliée entre la première paroi d'extrémité (21) et la deuxième paroi d'extrémité (22), et une forme de la première paroi d'extrémité (21) et/ou une forme de la deuxième paroi d'extrémité (22) est/sont configurée(s) pour s'adapter à une paroi interne de l'enceinte (10) de manière à empêcher le rayonnement de quitter le canal (30) depuis l'espace de réception (23) par le biais de la deuxième ouverture (12) ou de la première ouverture (11),
dans lequel l'au moins un écran de blindage (13) possède une extrémité reliée à la paroi interne de l'enceinte (10) et s'étend transversalement par rapport à la direction d'extension du canal (30) sur une certaine longueur, de sorte que l'au moins un écran de blindage (13) chevauche spatialement la première paroi d'extrémité (21) et la deuxième paroi d'extrémité (22),
**caractérisé en ce que**
une partie supérieure et/ou une partie latérale de la première paroi d'extrémité (21) et/ou de la deuxième paroi d'extrémité (22) du plateau (20) comprend/comprennent une partie élastique déformable (24) qui chevauche partiellement l'au moins un écran de blindage (13), et la partie élastique déformable (24) est élastiquement déformable lorsqu'elle est en contact avec chacun de l'au moins un écran de blindage (13) pendant un processus de passage du plateau (20) par le canal (30), de sorte que la partie élastique déformable (24) de la première paroi d'extrémité (21) et/ou de la deuxième paroi d'extrémité (22) se déplace d'un côté vers l'autre côté de chacun de l'au moins un écran de blindage (13) lorsqu'elle est en contact avec l'écran de blindage (13).

2. Dispositif de protection contre le rayonnement selon la revendication 1, dans lequel l'au moins un écran de blindage (13) est disposé sur une circonférence partielle ou entière de la paroi interne de l'enceinte (10), de sorte que l'au moins un écran de blindage (13) chevauche spatialement la première paroi d'extrémité (21) et la deuxième paroi d'extrémité (22).

3. Dispositif de protection contre le rayonnement selon la revendication 1 ou 2, dans lequel l'au moins un écran de blindage (13) comprend une pluralité d'écrans de blindage (13) espacés les uns des autres sur la paroi interne de l'enceinte (10) à une pluralité d'emplacements différents du canal (30) dans la direction d'extension du canal (30).

4. Dispositif de protection contre le rayonnement selon la revendication 1 ou 2, dans lequel l'au moins un écran de blindage (13) est configuré pour empêcher le rayonnement de le traverser et est déformable afin de se conformer à un mouvement du plateau (20) lorsque le plateau (20) se déplace pour passer par le canal (30) et que la première paroi d'extrémité (21) ou la deuxième paroi d'extrémité (22) vient en contact avec chacun de l'au moins un écran de blindage (13), de manière à permettre à la première paroi d'extrémité (21) ou à la deuxième paroi d'extrémité (22) de se déplacer d'un côté vers l'autre côté de chaque écran de blindage (13).

5. Dispositif de protection contre le rayonnement selon la revendication 1 ou 2, dans lequel l'au moins un écran de blindage (13) chevauche spatialement et partiellement la première paroi d'extrémité (21) et/ou la deuxième paroi d'extrémité (22) dans la direction d'extension du canal (30), de sorte que le rayonnement soit bloqué par une partie de chevauchement de l'au moins un écran de blindage (13) avec la première paroi d'extrémité (21) et/ou la deuxième paroi d'extrémité (22) lorsqu'il s'échappe du canal (30) via la première ouverture (11) ou la deuxième ouverture (12).

6. Dispositif de protection contre le rayonnement selon la revendication 5, dans lequel le plateau (20) comprend une paroi latérale reliée à la partie de fond, et la paroi latérale est reliée entre la première paroi d'extrémité (21) et la deuxième paroi d'extrémité (22).

7. Dispositif de protection contre le rayonnement selon la revendication 1, dans lequel l'enceinte (10) est en outre configurée pour définir une cavité de source de rayonnement (14) destinée à contenir une source de rayonnement, et l'enceinte (10) est en outre configurée pour définir une cavité de dispositif de détection (15) destinée à contenir un dispositif de détection ; et
dans lequel la cavité de source de rayonnement (14) et la cavité de dispositif de détection (15) sont configurées pour permettre au rayonnement émis par la source de rayonnement d'entrer dans le canal (30) et d'entrer finalement dans la cavité de dispositif de détection (15).

8. Dispositif de protection contre le rayonnement selon la revendication 1, dans lequel une surface externe et/ou une surface interne de l'enceinte (10) est/sont recouverte(s) d'une couche de blindage contre le rayonnement afin d'empêcher le rayonnement de traverser l'enceinte (10); et/ou
dans lequel une surface externe et/ou une surface interne de la première paroi d'extrémité (21) et de la deuxième paroi d'extrémité (22) du plateau (20) est/sont recouverte(s) d'une couche de blindage contre le rayonnement afin d'empêcher le rayonnement de traverser les première et deuxième parois d'extrémité (21, 22).

9. Dispositif de protection contre le rayonnement selon la revendication 1, dans lequel la première paroi d'extrémité (21) et/ou la deuxième paroi d'extrémité (22) présente/présentent un contour rectangulaire, un contour circulaire, un contour elliptique, ou d'autres contours polygonaux correspondants par rapport à la première ouverture (11) et/ou à la deuxième ouverture (12).

10. Dispositif de protection contre le rayonnement selon la revendication 1, dans lequel le plateau (20) comprend un appareil de déplacement prévu au niveau de la partie de fond de sorte que le plateau (20) soit mobile à l'intérieur du canal (30).

11. Dispositif de protection contre le rayonnement selon la revendication 1, comprenant en outre un appareil de convoyage disposé à l'intérieur du canal (30) et configuré pour transporter le plateau (20) de l'une de la première ouverture (11) et de la deuxième ouverture (12) vers l'autre.

12. Dispositif d'inspection de sécurité, comprenant le dispositif de protection contre le rayonnement selon l'une quelconque des revendications 1 à 11.
